# FASCICULE DE BREVET EUROPEEN

(11) **EP 0 936 960 B1**
(45) Date de publication et mention de la délivrance du brevet: **03.04.2002**
(21) Numéro de dépôt: 97911068.1
(22) Date de dépôt: 30.10.1997
(51) Int. Cl.: B25G 1/10, B67B 7/04, B67B 7/16, B29C 67/00

(54) **PIECE D'EQUIPEMENT DECORATIVE UTILISEE COMME POIGNEE**
ALS HANDGRIFF BENUTZBARES DEKORATIVES AUSRÜSTUNGSTEIL
DECORATIVE EQUIPMENT PIECE USED AS A HANDLE

(30) Priorité: 31.10.1996 BE 9600926
(43) Date de publication de la demande: 25.08.1999
(73) Titulaire: Donck, Daniel, 3090 Overijse (BE)
(72) Inventeur: Donck, Daniel, 3090 Overijse (BE)
(74) Mandataire: Vandeberg, Marie-Paule L.G.
(86) Numéro de dépôt international: BE9700126
(87) Numéro de publication internationale: WO9818602

(56) Documents cités:
- EP-A- 0 060 154
- EP-A- 0 387 232
- DE-A- 3 243 772
- DE-A- 4 205 426
- DE-C- 459 334
- DE-U- 9 300 220
- FR-A- 2 452 900

## Description

L'invention concerne des pièces d'équipement, notamment des poignées pour mobilier et ustensiles divers, comportant une coquille de mollusque.

L'invention concerne également des montures pour pièces d'équipements et accessoires ainsi qu'un procédé de réalisation.

Les coquilles de mollusques ou coquillages sont utilisés depuis la nuit des temps dans les activités humaines. A de rares exceptions près, les coquillages sont des objets essentiellement fragiles. Leurs usages sont donc essentiellement ornementaux (bijoux, tels que pendentifs, boucles d'oreilles, colliers, etc..). Leurs emplois sont très limités, notamment à cause du manque de résistance des coquilles aux sollicitations mécaniques.

Un type d'utilisation ornementale est décrit notamment dans le brevet EP-A-0 387 232 du même titulaire, qui concerne un présentoir pour coquillage.

Certains coquillages rares ou particulièrement ornementaux font l'objet d'un commerce spécialisé, parfois critiqué pour des raisons écologiques. Cependant, pour beaucoup de régions du monde dont l'économie est tournée vers la mer, les mollusques constituent une source de nourriture régulière.

Dans ces régions, les coquilles vidées de leur contenus sont considérées strictement comme des déchets, dont on se débarrasse comme tels.

Ces rebuts, sous leur gangue minérale et végétale, offrent cependant une possibilité d'emploi pour autant qu'ils soient convenablement nettoyés, polis et éventuellement retravaillés.

L'invention a pour but la mise en valeur des coquilles vides de mollusques, en particulier ceux passant par la chaîne alimentaire humaine, dans des applications utilitaires.

L'un des objets de l'invention est une pièce d'équipement caractérisée en ce qu'elle comprend
- une coquille de mollusque,
- une monture comportant au moins une partie solidarisée à ladite coquille
- des moyens de solidarisation aptes à solidariser ladite monture à un autre organe. Cet autre organe peut être une pièce fixe, ou élément de mobilier, la tête d'un outil ou d'un ustensile; la coquille comprend un agent de renforcement composé essentiellement d'un matériau durcissable apte à être injecté dans au moins une partie de la cavité de cette coquille.

La coquille est de préférence percée au niveau de la monture par un orifice débouchant sur une partie renforcée de ladite coquille.

Suivant une forme de réalisation avantageuse, la monture comprend une couronne creuse et un orifice mettant en communication l'intérieur de ladite couronne et un siège apte à accueillir la coquille.

Dans ce cas, le siège est de préférence creux et il comporte sur son pourtour un rebord rentrant.

Suivant une autre forme de réalisation avantageuse, la monture a la forme d'une douille, une partie au moins de la surface extérieure de cette douille étant en contact avec la coquille et l'agent de renforcement.

De façon optionnelle, la douille de la monture est ouverte à son extrémité tournée vers la cavité de la coquille.

La coquille est par exemple celle d'un Trochidé, et son embouchure peut être obturée pour la réalisation de la pièce d'équipement par un matériau approprié ou formée par un opercule. La monture peut comprendre une pièce d'ancrage dont la tête est noyée dans un matériau durcissable.

Un objet de l'invention est également un ustensile qui comporte une pièce d'équipement telle que décrit ci-dessus plus particulièrement utilisée comme poignée ou un équipement pour mobilier qui comporte une telle poignée.

L'invention a également pour objet une pièce de mobilier caractérisée en ce qu'elle comporte:
- une coquille de mollusque,
- un agent de renforcement composé essentiellement d'un matériau durcissable apte à être injecté dans au moins une partie de la cavité de cette coquille,
- une monture comportant au moins une partie solidarisée à ladite coquille et au dit agent de renforcement
- des moyens de solidarisation aptes à solidariser ladite monture à un autre organe.

Un autre objet de l'invention est une monture pour poignée en coquillage qui comprend:
- une couronne dont la surface latérale extérieure est filetée,
- une des extrémités axiales de cette couronne comportant un, siège creux apte à recevoir la surface extérieure d'un coquillage renforcé, au moins localement, par un matériau duroissable,
- ce siège creux étant solidarisé au dit coquillage et communiquant avec le volume intérieur de la couronne;
- une embase comportant une virole la surface latérale intérieure de cette embase étant filetée, complémentairement à la première couronne;
- la base de cette embase comportant des moyens de solidarisation à un organe fixe.

Le siège, creux, comporte de préférence un rebord rentrant vers l'intérieur.

Un autre objet de l'invention est le procédé de fabrication pour une pièce d'équipement qui comporte les opérations suivantes:
- nettoyer la surface d'une coquille de mollusque
- placer une première partie d'une monture comportant un siège de forme appropriée sur une partie de la coquille éventuellement remplie par un matériau durcissable
- fixer provisoirement en place cette partie de monture
- remplir une cavité de cette partie de monture d'un deuxième matériau durcissable
- provoquer le durcissement de ce deuxième matériau
- solidariser à la première partie de la monture, une deuxième partie comportant des moyens de solidarisation à un autre organe.

Le procédé ci-dessus peut en outre comporter les opérations suivantes:
- introduire dans ladite coquille, par un orifice approprié, un matériau durcissable, de façon telle qu'une partie au moins de cette coquille soit remplie de ce matériau durcissable
- laisser durcir ledit matériau

Un avantage de l'invention est que les coquillages ainsi traités sont à même de supporter des sollicitations importantes, notamment en torsion et flexion, ce qui rend possible leur utilisation pour des objets utilitaires ou parties de tels objets (notamment, les poignées).

La fixation sur une monture et le renforcement éventuel répartissent les sollicitations mécaniques sur des zones d'appui tridimensionnelles (non ponctuelles) de la coquille, dont la structure assure à l'ensemble des propriétés mécaniques remarquables.

On peut ainsi fabriquer par exemple des boutons de porte, d'armoires, des poignées de tiroirs, des patères, des glands de rideau, des têtes de robinet, des têtes de carafe, des tire-bouchons et autres ustensiles ou accessoires ainsi qu'un grand nombre d'objets utilitaires ou décoratifs qui acquièrent un caractère durable.

D'autres particularités et avantages de l'invention ressortiront de la description ci-après de formes de réalisations particulières, référence étant faite aux dessins annexés dans lesquels:
la Fig. 1 est une vue en élévation avec arrachement et coupe partielle d'une pièce d'équipement suivant l'invention;
la Fig. 2 est une vue similaire d'un autre mode de réalisation;
les Figs. 3 et 8 sont des vues également en élévation avec arrachement et coupe partielle d'une coquille de bivalve dotée de variantes de montures;
la Fig. 4 est une vue éclatée en perspective basée sur un coquillage conique;
la Fig. 5 est une vue en perspective avec arrachement d'une poignée formée-d'une coquille conique;
les Figs. 6 et 7 sont des vues en plan d'équipements dotés de poignées suivant l'invention.

Les poignées, pièces d'équipement et ustensiles suivant l'invention peuvent être obtenus par différents procédés notamment comme décrit ci-après.

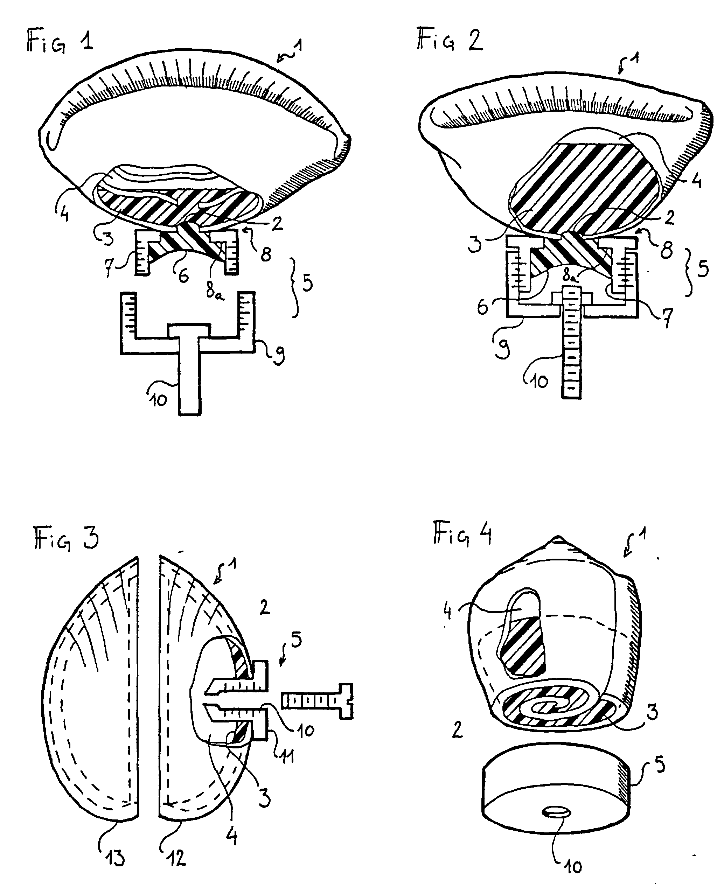

Suivant une première forme de réalisation, montrée à la Fig. 1 pour la coquille 1 d'un gastéropode, on introduit par l'ouverture naturelle de la coquille 1 ou par un orifice 2 percé dans celle-ci un matériau durcissable 3, sous forme liquide ou pâteuse.

A la Fig. 1, seule la partie de la cavité 4 du coquillage 1 située à proximité du siège de sollicitations éventuelles est renforcée. Une monture 5, en l'occurrence métallique, est fixée sur la surface extérieure correspondante de la coquille 1 au moyen d'un matériau durcissable 6 qui peut être le même que le matériau 3 utilisé pour le remplissage.

Il va de soi que la monture 5 peut être réalisée, en fonction de critères économiques, en tout matériau présentant les qualités mécaniques appropriées et notamment certaines matières plastiques.

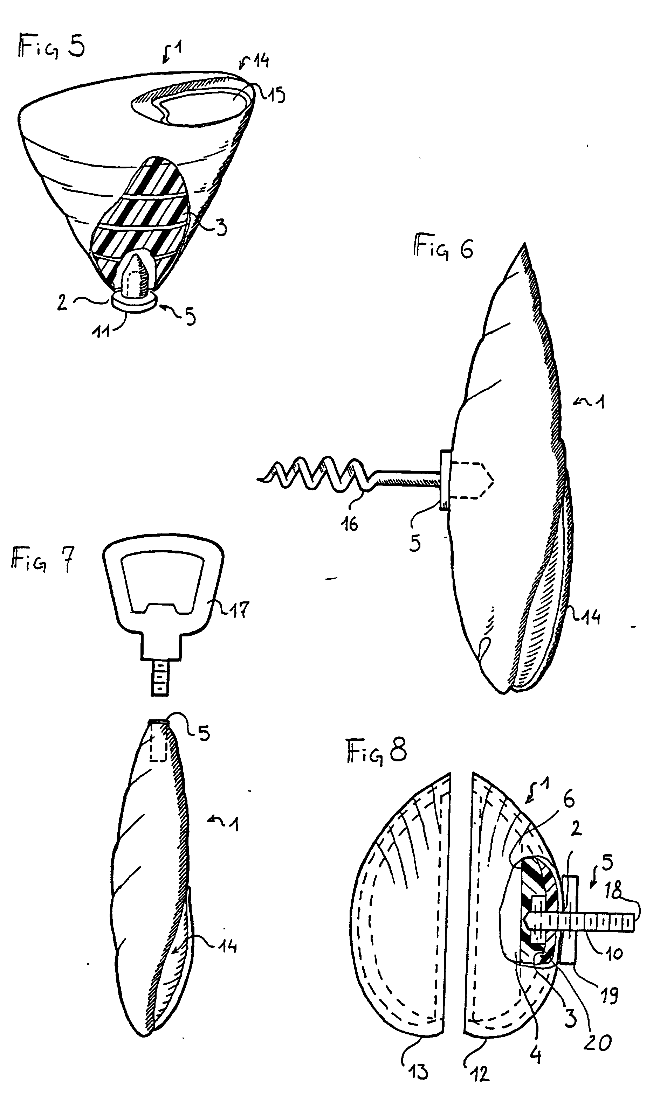

Une première partie 7 de cette monture 5, creuse, a la forme d'une couronne et comporte, à une de ses extrémités, un siège 8 doté d'un rebord 8a. Cette couronne 7 comporte un filetage extérieur qui s'adapte au filetage d'une embase 9, laquelle peut être fixée par un moyen de fixation 10 appropriée, à un meuble, une cloison, un élément d'huisserie, un ustensile (ménager par exemple) (voir Figs. 6, 7).

La Fig. 2 montre une autre forme de réalisation: la coquille 1 (ici, également celle d'un gastéropode) est remplie presque entièrement par le matériau durcissable 3.

On procède généralement comme suit:

Le matériau durcissable 3, dont la viscosité est choisie en fonction des dimensions de l'orifice 2 (il peut être pâteux si l'ouverture est grande) est introduit dans la cavité 4. Le temps de durcissement est généralement de quelques heures.

Après repérage de la position idéale, la couronne 7 est mise en place sur la coquille 1 retournée et maintenue en position, par exemple par quelques gouttes de colle à chaud (Hot melt). On remplit ensuite l'intérieur de la couronne 7 avec le mélange durcissable 6.

Après durcissement du mélange 6, un complément de composant durcissable est ajouté (si nécessaire, suivant le type d'application) et l'embase 9 est vissée définitivement en place.

La Fig. 3 montre un mode de réalisation utilisant la coquille à deux valves 12, 13 d'un mollusque bivalve. Au moins une partie de la cavité 4 intérieure est tapissée d'un matériau durcissable 3. Les deux valves 12, 13 formant la coquille sont solidarisés le long de leur pourtour par un matériau adhésif ou durcissable. La monture 5 a ici la forme d'une douille filetée 11, introduite dans un orifice 2 ménagé dans la valve 12.

Comme on le voit à la Fig. 3, il n'est pas nécessaire de remplir le coquillage de façon complète pour obtenir des bonnes caractéristiques mécaniques: une couche relativement mince de matériau durcissable étalée à l'intérieur de la coquille est également intéressante dans certaines applications.

L'extrémité intérieure de la douille 11 peut être ouverte à son extrémité introduite dans la cavité intérieure 4 de la coquille 1, ce qui permet éventuellement d'introduire, dans le volume ainsi rendu accessible, un liquide alimentaire ou cosmétique ou des fluides colorés, ainsi que des pilules, granulés ou poudres.

On peut, suivant le sens de la prise en main, faire coïncider l'orifice 2 avec le plan de jonction des deux valves 12, 13.

La Fig. 4 montre, en éclaté, l'utilisation de la coquille 1 d'un mollusque en forme de cône (Conidae). La pointe inférieure de cette coquille 1 a été coupée. Le matériau durcissable 3 remplit la partie inférieure du coquillage ainsi tronqué, qui est insérée dans une monture 5 en cuvette.

On peut également utiliser une douille 11 comme représentée à la Fig. 3.

La Fig. 5 montre une forme de parachèvement qui contribue également au renforcement d'une poignée suivant l'invention: l'embouchure 14 de la coquille 1, ici celle d'un Trochidé, est fermée par un opercule 15 de façon à éliminer toute arête ou discontinuité. L'embouchure 14 peut aussi être obturée par tout autre matériau approprié.

Le choix du type de monture 5 et de la façon de solidariser cette monture 5 à la coquille 1 dépendent bien sûr de la variété et de la taille de la coquille 1 utilisée. Certains mollusques forment une spirale serrée, plus résistante. La minceur des parois doit aussi être prise en compte. Enfin, certains mollusques produisent une coquille très lisse impropre à l'utilisation de colles.

Il y va de soi que le concept développé ici peut être utilisé pour une grande variété d'ustensiles tels que des bouchons de flacons, des tire-bouchons 16 (voir Fig. 6) décapsuleurs 17 (voir Fig. 7), des couverts assortis etc, et

en général pour tout type d'application impliquant des sollicitations appliquées à la poignée.

Les variétés de mollusques utilisables comprennent notamment les gastéropodes Cypraeidae, Trochidae, Turbinidae, Solaridae etc. On notera que la réalisation représentée aux Figs. 1 et 2 est utilisable au choix comme pièce d'équipement, accessoire d'ameublement, comme poignée ou comme patère.

Bien que les pièces illustrées puissent supporter d'importantes sollicitations, elles peuvent bien sûr être utilisées comme simple pièces ornementales (par exemple autour d'un miroir, etc..).

La Fig. 8 illustre une forme de réalisation appropriée pour des bivalves à coquilles minces ou peu résistantes. On peut procéder dans ce cas à la fixation de la monture 5 avant la solidarisation des deux valves 12, 13. La monture 5 comprend ici une tige filetée 18. Le siège est formé par une rondelle 19 filetée. L'orifice 2 est réalisé après renforcement de la valve 12 par le matériau durcissable 3. On évite ainsi l'écrasement de la valve ou la formation d'éclats.

A la tête de la tige filetée 18, un écrou 20 est introduit par l'intérieur. La tête est scellée en place par noyade dans le matériau durcissable 6. La tige 18 peut être creuse et de plus grand diamètre, ce qui améliore son assiette.

La monture 5 pourrait également être pourvue d'une pièce d'ancrage à tête extensible qui peut être mise en place par l'extérieur. Une telle monture peut s'utiliser aussi avec les coquilles de mollusques autres que les bivalves.

Une sélection des tons et coloris naturels des coquillages permet de réaliser des ustensiles ou accessoires en séries assorties, dont chaque exemplaire est néanmoins unique.

Les matériaux durcissables utilisés peuvent être notamment les colles ciments pour carrelage, les résines polyesters ou divers types de colle de composition appropriée aux matériaux en présence. On peut également utiliser une combinaison de ces différents produits.

Il est souhaitable que ces matériaux présentent un pH neutre, vu les matériaux en présence, et qu'ils n'altèrent pas les pigments naturels des coquillages.

On peut citer à titre d'exemple non limitatif les résines époxy à deux composants UNIPOX® et la colle polyuréthanne RECTICOL® .

## Revendications

1. Pièce d'équipement **caractérisée en ce qu'**elle comprend
- une coquille de mollusque (1)
- une monture (5) comportant au moins une partie (7) solidarisée à ladite coquille (1)
- des moyens de solidarisation (10) aptes à solidariser ladite monture (5) à un autre organe (16, 17), la coquille (1) comprenant un agent de renforcement (3) composé essentiellement d'un matériau durcissable apte à être injecté avant durcissement dans au moins une partie de la cavité (4) de cette coquille (1).

2. Pièce d'équipement suivant la revendication 1 **caractérisée en ce que** la coquille (1) est percée au niveau de la monture (5) par un orifice (2).

3. Pièce d'équipement suivant la revendication 2, **caractérisée en ce que** la monture (5) comprend une couronne creuse (7) et un orifice (2) mettant en communication l'intérieur de ladite couronne (7) et un siège (8) apte à accueillir la coquille (1).

4. Pièce d'équipement suivant la revendication 3, **caractérisée en ce que** le siège (8) est creux et comporte un rebord rentrant.

5. Pièce d'équipement suivant la revendication 2, **caractérisée en ce que** la monture (5) a la forme d'une douille, au moins une partie de la surface extérieure de ladite douille (11) étant en contact avec la coquille (1) et l'agent de renforcement (3).

6. Pièce d'équipement suivant la revendication 5, **caractérisée en ce que** la douille (11) de la monture (5) est percée à son extrémité tournée vers la cavité (4) de la coquille (1).

7. Pièce d'équipement suivant l'une quelconque des revendications précédentes, **caractérisée en ce que** l'embouchure (14) de ce coquillage (1) est obturée.

8. Pièce d'équipement suivant la revendication 7, **caractérisée en ce que** le mollusque est un Trochidae, l'embouchure (14) étant fermée par un opercule (15).

9. Pièce d'équipement suivant la revendication 3 **caractérisée en ce que** la monture (5) comprend une pièce d'ancrage (18) dont la tête (20) est noyée dans un matériau durcissable (6).

10. Ustensile **caractérisé en ce qu'**il comporte une pièce d'équipement suivant l'une quelconque des revendications 1 à 9.

11. Ustensile suivant la revendication 10, **caractérisé en ce que** la pièce d'équipement est une poignée.

12. Pièce de mobilier **caractérisée en ce qu'**elle comporte
- une coquille de mollusque (1)
- un agent de renforcement (3) composé essentiellement d'un matériau durcissable apte à être injecté dans au moins une partie de la cavité (4) de cette coquille (1)
- une monture (5) comportant au moins une partie (7) solidarisée à ladite coquille (1) et au dit agent de renforcement (3)
- des moyens de solidarisation (9) aptes à solidariser ladite monture (5) à un autre organe.

13. Monture (5) pour pièce d'équipement en coquillage selon la revendication 1 **caractérisée en ce qu'**elle comprend:
- une couronne (7) dont la surface latérale extérieure est filetée, une des extrémités axiales de cette couronne (7) comportant un siège (8) creux apte à recevoir la surface extérieure d'un coquillage (1) renforcé, au moins localement, par un matériau durcissable
- ce siège creux étant solidarisé au dit coquillage et communiquant avec le volume intérieur de la couronne (7)
- une embase (9) comportant une virole, la surface latérale intérieure de cette embase (9) étant filetée, complémentairement à la couronne (7)
- la base de cette embase (9) comportant des moyens de solidarisation (10) à un organe (16, 17).

14. Monture suivant la revendication 13, **caractérisée en ce que** le siège creux (8) comporte un rebord (8a) rentrant vers l'intérieur.

15. Procédé de fabrication d'une pièce d'équipement **caractérisé en ce qu'**il comporte les opérations suivantes:
- nettoyer la surface d'une coquille (1) de mollusque
- placer sur une partie de la coquille une première partie (7) d'une monture (5) comportant un siège (8) de forme appropriée, ladite partie de la coquille étant éventuellement remplie par un matériau durcissable
- fixer provisoirement en place cette partie de monture (7)
- remplir une cavité de cette partie de monture (7) d'un deuxième matériau durcissable (6)
- provoquer le durcissement de ce deuxième matériau (6)
- solidariser à la première partie (7) de la monture (5), une deuxième partie (9) comportant des moyens de solidarisation (10) à un autre organe (16, 17).

16. Procédé suivant la revendication 15, **caractérisé en ce qu'**il comporte en outre les opérations suivantes:
- introduire dans ladite coquille (1), par un orifice (2) approprié, un matériau durcissable (3), à l'état liquide ou pâteux de façon telle qu'une partie au moins de cette coquille (1) soit remplie de ce matériau durcissable (3)
- laisser durcir ledit matériau (3).

## Patentansprüche

1. Ausrüstungsteil, **dadurch gekennzeichnet, daß** es
- ein Weichtier-Schalengehäuse (1),
- ein zumindest ein mit dem Schalengehäuse vereinigtes Teil (7) umfassendes Montageteil (5) und
- Befestigungsmittel (10) umfaßt, die geeignet sind, das Montageteil (5) mit einem anderen Organ (16, 17) fest zu verbinden, wobei das Schalengehäuse (1) ein Verstärkungsmittel (3) umfaßt, das im wesentlichen aus einem härtbaren Material besteht, welches geeignet ist, vor einer Aushärtung in zumindest einen Bereich des Hohlraums (4) des Schalengehäuses (1) eingebracht zu werden.

2. Ausrüstungsteil nach Anspruch 1, **dadurch gekennzeichnet, daß** das Schalengehäuse (1) in Höhe des Montageteils (5) von einer Öffnung (2) durchbohrt ist.

3. Ausrüstungsteil nach Anspruch 2, **dadurch gekennzeichnet, daß** das Montageteil (5) einen Hohlkranz (7) und eine Öffnung (2), die mit dem Innenraum des Kranzes (7) in Verbindung steht, und einen Sitz (8) umfaßt, der geeignet ist, das Schalengehäuse (1) aufzunehmen.

4. Ausrüstungsteil nach Anspruch 3, **dadurch gekennzeichnet, daß** der Sitz hohl ist und eine zurückspringende Randleiste umfaßt.

5. Ausrüstungsteil nach Anspruch 2, **dadurch gekennzeichnet, daß** das Montageteil (5) die Form einer Hülse aufweist, wobei zumindest ein Bereich der Außenfläche der Hülse (11) mit dem Schalengehäuse (1) und dem Verstärkungsmittel (3) in Berührung steht.

6. Ausrüstungsteil nach Anspruch (5), **dadurch gekennzeichnet, daß** die Hülse (11) des Montageteils (5) an ihrem dem Hohlraum (4) des Schalengehäuses (1) zugewandten Ende durchbohrt ist.

7. Ausrüstungsteil nach einem der vorhergehenden Ansprüche, **dadurch gekennzeichnet, daß** die Mündung (14) dieses Schalengehäuses (1) verschlossen ist.

8. Ausrüstungsteil nach Anspruch 7, **dadurch gekennzeichnet, daß** das Weichtier ein Trochid ist, dessen Mündung (14) durch einen Deckel (15) geschlossen ist.

9. Ausrüstungsteil nach Anspruch 3, **dadurch gekennzeichnet, daß** das Montageteil (5) ein Verankerungsteil (18) aufweist, dessen Kopf (20) in ein härtbares Material (6) eingelassen ist.

10. Gerät, **dadurch gekennzeichnet, daß** es ein Ausrüstungsteil nach einem der Ansprüche 1 bis 9 umfaßt.

11. Gerät nach Anspruch 10, **dadurch gekennzeichnet, daß** das Ausrüstungsteil ein Handgriff ist.

12. Möbelteil, **dadurch gekennzeichnet ist, daß** es
- ein Weichtier-Schalengehäuse (1),
- ein Verstärkungsmittel (3), das im wesentlichen aus einem härtbaren Material besteht, welches geeignet ist, in zumindest einen Bereich des Hohlraums (4) dieses Schalengehäuses (1) eingebracht zu werden,
- ein zumindest einen mit dem Schalengehäuse (1) und dem Verstärkungsmittel (3) fest verbundenen Bereich (7) umfassendes Ausrüstungsteil (5) und
- Befestigungsmittel (9) umfaßt, die geeignet sind, das Ausrüstungsteil (5) mit einem anderen Organ fest zu verbinden.

13. Montageteil (5) für ein Ausrüstungsteil aus Schalentier-Gehäuse nach Anspruch 1, **gekennzeichnet durch**
- einen Kranz (7), dessen seitliche Außenfläche mit Gewinde versehen ist, wobei eines der axialen Enden dieses Kranzes (7) einen Hohlsitz (8) aufweist, der geeignet ist, die Außenfläche eines zumindest örtlich **durch** ein härtbares Material verstärkten Schalengehäuses (1) aufzunehmen,
- wobei dieser Hohlsitz mit dem Schalengehäuse fest verbunden ist und mit dem Innenraum des Kranzes (7) in Verbindung steht,
- ein einen Ring umfassendes Fußteil (9), wobei die innere Seitenfläche dieses Fußteils (9) mit einem zum Kranz (7) komplementären Gewinde versehen ist, und
- die Basis dieses Fußteils (9) Befestigungsmittel (10) für ein Organ (16, 17) aufweist.

14. Montageteil nach Anspruch 13, **dadurch gekennzeichnet, daß** der Hohlsitz (8) eine Randleiste (8a) aufweist, die zum Inneren zurückspringt.

15. Verfahren zur Herstellung eines Ausrüstungsteils, **dadurch gekennzeichnet, daß** es die folgenden Schritte umfaßt:
- die Oberfläche eines Weichtier-Schalengehäuses (1) reinigen,
- auf einem Bereich des Schalengehäuses einen ersten Bereich (7) eines Montageteils (5) mit einem Sitz (8) von geeigneter Form anbringen, wobei der Bereich des Schalengehäuses ggf. mit einem härtbaren Material gefüllt wird,
- diesen Bereich des Montageteils (7) an seinem Platz provisorisch festlegen,
- einen Hohlraum dieses Bereichs dieses Montageteils (7) mit einem zweiten härtbaren Material (6) füllen,
- die Härtung dieses zweiten Materials (6) herbeiführen und
- einen zweiten Bereich (9) mit Befestigungsmitteln (10) für ein anderes Organ (16, 17) mit dem ersten Bereich (7) des Montageteils (5) fest verbinden.

16. Verfahren nach Anspruch 15, **dadurch gekennzeichnet, daß** es außerdem die folgenden Schritte umfaßt:
- ein härtbares Material (3) im flüssigen oder pastösen Zustand in das Schalengehäuse durch eine geeignete Öffnung (2) einführen, derart, daß zumindest ein Bereich dieses Schalengehäuses (1) mit dem härtbaren Material (3) gefüllt wird, und
- das Material (3) aushärten lassen.

## Claims

1. A fitting, **characterized in that** it comprises
- a mollusc shell (1),
- a mount (5) including at least one part secured to the said shell (1),
- securing means (10) suitable for securing the said mount (5) to another member (16,17), the shell (1) comprising a strengthening agent (3) composed essentially of a hardening material suitable for being injected prior to hardening into at least a part of the cavity (4) of this shell(1).

2. A fitting according to Claim 1, **characterised in that** the shell (1) is pierced at the level of the mount (5) with an orifice (2).

3. A fitting according to Claim 2, **characterised in that** the mount (5) comprises a hollow ring (7) and an orifice (2) placing the inside of the said ring and a seat (8) suitable for receiving the shell (1) in communication.

4. A fitting according to Claim 3, **characterised in that** the seat (8) is hollow and includes a reentrant edge.

5. A fitting according to Claim 2, **characterised in that** the mount (5) is in the form of a sleeve, at least a part of the outer surface of the said sleeve (11) being in contact with the shell (1) and the strengthening agent (3).

6. A fitting according to Claim 5, **characterised in that** the sleeve (11) of the mount (5) is pierced at its end which faces the cavity (4) of the shell (1).

7. A fitting according to any one of the preceding claims, **characterised in that** the opening (14) of this shell (1) is closed off.

8. A fitting according to Claim 7, **characterised in that** the mollusc is a Trochidae, the opening (14) being closed by an operculum (15).

9. A fitting according to Claim 3, **characterised in that** the mount (5) comprises an anchoring component (18), the head (20) of which is embedded in a hardening material (6).

10. An utensil, **characterised in that** it includes a fitting according to any one of claim 1 to 9.

11. An utensil according to Claim 10, **characterised in that** the fitting is a handle.

12. An item of furniture, **characterised in that** it includes
- a mollusc shell (1),
- a strengthening agent (3) composed essentially of a hardening material suitable for being injected into at least a part of the cavity (4) of this shell (1),
- a mount (5) including at least a part (7) secured to the said shell (1) and to the said strengthening agent (3),
- securing means (9) suitable for securing the said mount (5) to another member.

13. A mount for a fitting made from a shell according to claim 1 **characterised in that** comprises:
- a ring (7) of which the outer lateral surface is threaded, one of the axial ends of this ring including a hollow seat (8) suitable for receiving the outer surface of a shell (1) reinforced, at least locally, by a hardening material
- this hollow seat being attached to said shell and communicating with the inner volume of the ring (7),
- a base (9) including a ferrule, the inner lateral surface of this base (9) being threaded, to complement the ring (7),
- the bottom of this base (9) including means (10) for securing to a member (16,17).

14. A mount according to Claim 13, **characterised in that** the hollow seat (8) includes an inwardly reentrant edge.

15. A process for manufacturing a fitting, **characterised in that** it includes the following operations:
- cleaning the surface of a mollusc shell (1),
- placing, on a part of the shell, a first part (7) of a mount (5) including a seat of suitable shape, said part of the shell being possibly filled with a hardening material,
- temporarily securing this mount part (7) in place,
- filling a cavity of this mount part (7) with a second hardening material (6),
- hardening this second material(6),
- securing, to the first part (7) of the mount (5), a second part (9) including means (10) for securing to another member(16, 17).

16. A process according to Claim 15, **characterised in that** it further includes the following operations:
- introducing a hardening material (3) in the liquid or pasty state into the shell (1) via a suitable orifice(2) so that at least a part of this shell (1) is filled with this hardening material (3),
- allowing the said material (3) to harden.
